# EUROPÄISCHE PATENTANMELDUNG

(11) **EP 1 005 975 A2**
(43) Veröffentlichungstag der Anmeldung: **07.06.2000**
(21) Anmeldenummer: 99123640.7
(22) Anmeldetag: 27.11.1999
(51) Int. Cl.: B29C 49/52

(54) **Blasform mit einem Formhohlraum, indem sich verstellbare Indexiermittel befinden**

(30) Priorität: 01.12.1998 AT 203298
(71) Anmelder: FRIES PLANUNGS- UND MARKETINGGESELLSCHAFT m.b.H., 6832 Sulz (AT)
(72) Erfinder: Rhomberg, Thomas, Ing., 6832 Röthis (AT)
(74) Vertreter: Hefel, Herbert, Dipl.-Ing.

(57) **Zusammenfassung**

Eine Blasform mit einem Formhohlraum zur Herstellung von aus Kunststoffen gefertigten Hohlkörpern besteht aus mindestens zwei Formteilen, die bei geschlossenem Zustand mit ihren inneren Wandungen den den zu fertigenden Hohlraum gestaltenden Formhohlraum bilden. An der inneren Wandung (5) des Formhohlraumes ist mindestens ein Fenster ausgespart, in bzw. hinter welchem ein mechanisches Zählwerk mit Umdrehungszählung, insbesondere ein Rollenzählwerk (11), angeordnet ist, wobei die Rollen des Rollenzählwerks (11) auf einer Hohlwelle (15) gelagert sind und diese Hohlwelle (15) an einem Kühlkreis des Formteiles (2) angeschlossen ist.

## Beschreibung

Die Erfindung bezieht sich auf eine Blasform mit einem Formhohlraum zur Herstellung von aus Kunststoffen gefertigten Hohlkörpern, bestehend aus mindestens zwei Formteilen, die bei geschlossenem Zustand mit ihren inneren Wandungen den den zu fertigenden Hohlraum gestaltenden Formhohlraum bilden.

Blasformen dieser Art sind bekannt, ebenso ihre Anwendung zur Herstellung von geblasenen Hohlkörpern wie Flaschen, Kanister, Fässer u. dgl. aus Kunststoff. Solche aus Kunststoff bestehende Emballagen aller Art werden immer mehr zum Lagern und auch zum Transport von für den Menschen gefährlichen und die Umwelt schädigenden Materialien verwendet. Es werden daher an solche Behälter - was ihre Sicherheit betrifft - immer höhere Anforderungen gestellt, um Schäden jeglicher Art soweit wie möglich zu vermeiden. Falls gegen alle Vorsicht trotzdem einmal ein Schaden auftreten sollte, ist es wichtig, den Behälter bis zu seinem Herstellungsort zurückverfolgen zu können, vor allem, wenn es um die Haftung für solche Schäden geht. Es wurden daher Verfahren zur Etikettierung von Kunststoffbehältern entwickelt (DE 33 34 643 C2), die im Blasverfahren hergestellt werden, und zwar mit einer geteilten Herstellungsform, in deren geöffneter Stellung ein Vorformling eingebracht und in deren geschlossener Stellung der Behälter fertiggeblasen wird. Die hier vorgesehene Einrichtung beinhaltet auch einen Blas- und Kalibrierdorn und eine Aufnahmevorrichtung, die ein einem Vorrat entnehmbares Etikett vor dem Blasvorgang an die Innenwand der geöffneten Form überführt. Zum Aufnehmen der Etiketten außerhalb der Blasform, zu deren Transport in die Blasform und zur Plazierung der Etiketten an der inneren Formwand wird der erwähnte Kalibrierdorn eingesetzt, und zwar derart, daß er während des Kalibriervorganges die einzubringenden Etiketten außerhalb der Blasform aufnimmt und dieselben im Inneren der Blasform plaziert, wenn das Ablegen des vorangegangenen fertigen Behälters vom Kalibrierdorn erfolgt. Abgesehen vom konstruktiven Aufwand für eine solche Einrichtung, ist die Etikettierung von Emballagen der in Rede stehenden Art ein nur unzureichendes Kennzeichnungsverfahren, da nicht auszuschließen ist, daß während des bestimmungsgemäßen Gebrauchs eines solchen Behälters das Etikett abgelöst wird, sei es durch eine bewußte Handlung, sei es durch Witterungseinflüsse.

Auch die E 0 098 351 B1 zeigt und beschreibt eine ähnliche Einrichtung. Hier wird das Etikett am Rohling für den zu blasenden Hohlkörper angebracht, bevor dieser in die Blasform eingeführt wird. Dies geschieht dann, wenn sich der Rohling in warm verformbarem Zustand befindet. Die Nachteile dieser Konstruktion sind vergleichbar mit jenen, die mit der Einrichtung nach der DE 33 34 643 C2 aufgezeigt wurden.

Ziel der Erfindung ist es daher, eine Möglichkeit bei einer solchen Blasform zu schaffen, die eine dauerhafte Kennzeichnung des herzustellenden Gegenstandes ermöglicht, und dies mit geringem konstruktivem Aufwand. Außerdem soll trotz der Kennzeichnung ein kurzer Produktionszyklus ohne Qualitätsverluste des geblasenen Hohlkörpers erreicht werden. Zur Lösung dieser komplexen Aufgabe schlägt die Erfindung vor, daß an der inneren Wandung des Formhohlraumes mindestens ein Fenster ausgespart ist, in bzw. hinter welchem ein mechanisches Zählwerk mit Umdrehungszählung, insbesondere ein Rollenzählwerk, angeordnet ist, wobei die Rollen des Rollenzählwerks auf einer Hohlwelle gelagert sind und diese Hohlwelle an einem Kühlkreis des Formteiles angeschlossen ist.

Aus der US-PS 5,057,000, der FR-PS 1 486 929 und der FR-A1-2 692 519 ist es bereits bekannt, Zählwerke in Formen von geteilten Teilen anzuordnen. In der US-PS 5,057,000 handelt es sich bei den geformten Teilen um gegossene Metallteile, in der FR-PS 1 486 929 sind markierte Taubenringe aus Leichtmetall oder spritzgegossenem Kunststoff beschrieben und in der FR-A1-2 692 519 werden gegossene Kunststoffteile über solche Zählwerke markiert. Blasformen mit darin angeordneten Zählwerken gehen aus diesen Schriften jedoch nicht hervor. Weiters ist es auch nicht bekannt, eine Kühlung des Rollenzählwerks vorzusehen, wozu erfindungsgemäß die Rollen des Rollenzählwerks auf einer Hohlwelle gelagert sind und diese Hohlwelle an einem Kühlkreis angeschlossen ist. Durch eine derartige Kühlung wird ein kurzer Produktionszyklus von markierten Hohlkörpern ohne Qualitätsverluste erreicht.

Anhand der Zeichnung wird ein Ausführungsbeispiel der Erfindung näher beschrieben, ohne die Erfindung auf eben dieses Beispiel einzuschränken. Es zeigen:
- Fig. 1: einen Vertikalschnitt durch eine schematisch dargestellte, zwei Formteile aufweisende Blasform;
- Fig. 2: das in Fig. 1 mit A bezeichnete Detail in einem gegenüber Fig. 1 vergrößerten Maßstab;
- Fig. 3: einen Vertikaischnitt nach der Linie III-III in Fig. 2;

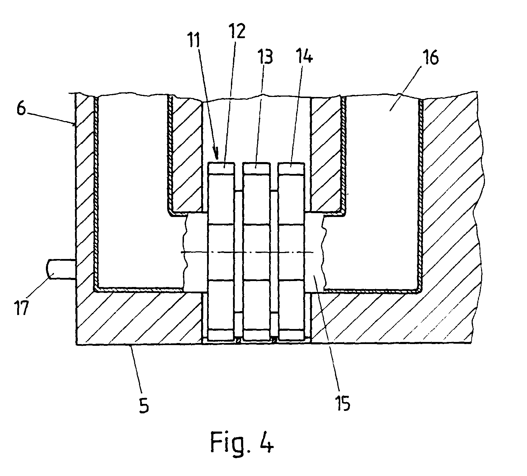

- Fig. 4: einen Horizontalschnitt nach der Linie IV-IV in Fig. 2.

Die hier schematisch gezeigte Blasform besteht aus den beiden Formteilen 1 und 2, die im geöffneten Zustand dargestellt sind. Diese Formteile 1 und 2 sind von einer Vielzahl von Kanälen 3 durchsetzt, die beim betriebsmäßigen Einsatz der Blasform von einem Kühlmedium durchströmt sind. Bei geschlossener Form begrenzen die Innenwandungen 4 und 5 den Formhohlraum, der den in einem Blasvorgang herzustellenden Hohlkörper gestaltet. Diese inneren Wandungen 4 und 5 sind dann korrespondierend zur Umrißgestalt des zu formenden Hohlkörpers ausgeführt.

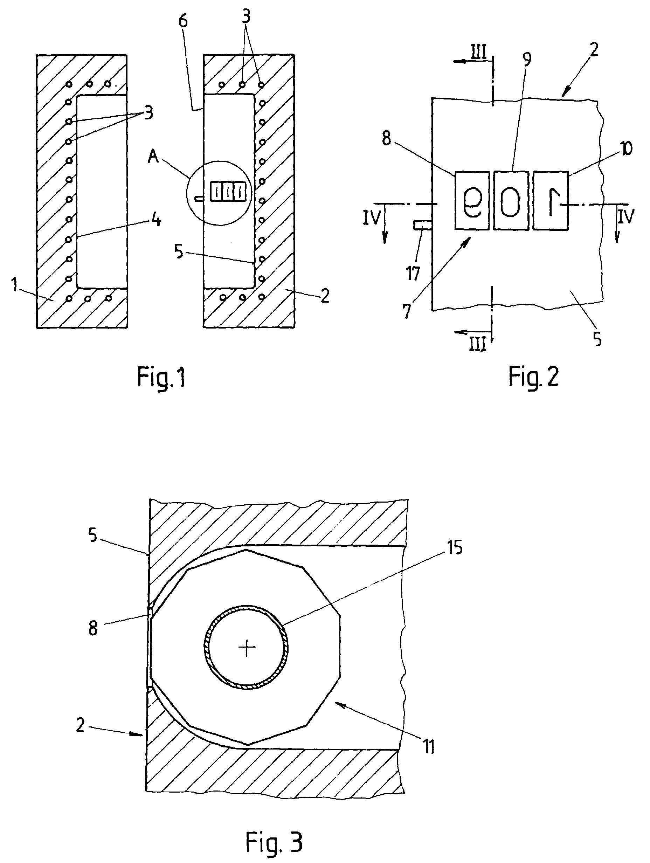

In der Wandung 5 des in Fig. 1 rechten Formteiles 2, und zwar nahe der Trennfläche 6, ist ein mehrteiliges Fenster 7 ausgespart, das hier beim gezeigten Ausführungsbeispiel drei rechteckige Öffnungen 8, 9 und 10 aufweist. Hinter diesem Fenster 7 ist nun ein mechanisches Zählwerk mit Umdrehungszählung, insbesondere ein drei Rollen 12, 13 und 14 aufweisendes Rollenzählwerk 11 angeordnet. Die Rollen 12, 13, 14 dieses Rollenzählwerks 11 sind in bekannter Weise mit Zeichen, insbesondere Zahlen oder Buchstaben, bestückt. Sind an den Rollen 12, 13, 14 Zahlen vorgesehen, so weisen sie entlang des Rollenumfanges in gleichen Abständen die Zahlenfolge 0 bis 9 auf. Es sei an dieser Stelle vermerkt, daß die Erfindung nicht auf Rollenzählwerke mit drei Rollen beschränkt ist, ein solches Rollenzählwerk kann auch mehrere solcher Rollen besitzen.

Die Rollen 12, 13 und 14 des Rollenzählwerks 11 sind auf einer Hohlwelle 15 fortschaltbar gelagert, und diese Hohlwelle 15 ist an den Kühlkreis 16 des Formteiles 2 angeschlossen.

Der mit dem Rollenzählwerk 11 verbundene Schaltmechanismus ist hier nicht dargestellt, nur der Schaltstift 17, der gegenüber der Trennfläche 6 des Formteiles 2 vorsteht. Durch axiales Verschieben des Schaltstiftes 17 wird das Rollenzählwerk 11 in bekannter Weise betätigt. Wird dieser Schaltstift 17 gegen die Trennfläche 6 gedrückt, so wird das Rollenzählwerk 11 stets um eine Zahl weitergeschaltet. In der Trennwand 6 kann auch noch eine Vorrichtung untergebracht sein, mit deren Hilfe das Rollenzählwerk 11 gegebenenfalls auf Null rückstellbar ist. Es liegt im Rahmen der Erfindung, mit diesem Rollenzählwerk 11 beispielsweise ein elektrisches oder elektronisches Druckwerk zu verbinden, das außerhalb des Formteiles 2 liegt und mit dem die gezählte Menge als Beleg auf eine Karte oder einen Schein ausgedruckt werden kann.

Zwischen den fensterartigen Aussparungen im Formteil 2 für die Aufnahme des Rollenzählwerks und den Teilen des Rollenzählwerks 11 sind nur geringe, konstruktiv bedingte Spalte vorhanden. Dies ist jedoch für eine Blasform kein Problem, da die zu verarbeitenden Kunststoffschläuche hinreichend zäh sind, so daß Spalte von der Größenordnung von ca. 0,1 bis 0,2 mm in der formgebenden Wandung tolerierbar sind.

Beim betriebsmäßigen Einsatz der Blasform wird in die geöffnete Form (Fig. 1) ein Kunststoffschlauch eingeführt. Dann wird die Form geschlossen, wobei der an der Trennfläche 6 befindliche Schaltstift 17 betätigt wird und das Rollenzählwerk 11 schaltet. Nun wird der heiße Kunststoffschlauch in der geschlossenen Form aufgeblasen und legt sich an die Formwandung 4, 5 an. Dabei wird die im Rollenzählwerk 11 eingestellte Zahl in den noch heißen Kunststoffschlauch eingedrückt. Anstelle von Zahlen können auch Buchstaben vorgesehen sein. Zweckmäßigerweise sind die Buchstaben oder anderen Zeichen erhaben auf den Rollen ausgebildet. Es ist aber auch denkbar, diese in die Rollen einzugravieren, so daß die Zeichen oder Zahlen vertieft sind. Ist der Blasvorgang beendet und wird anschließend die Blasform zur Entnahme des gefertigten Hohlkörpers geöffnet, so weist dieser die ihm eingeprägte oder eingedrückte Kennzahl auf. Wird die Blasform anschließend für die Produktion eines neuen Hohlkörpers geschlossen, so wird beim Schließen durch die Betätigung des Schaltstiftes 17 das Rollenzählwerk fortgeschaltet.

Wie aus den Zeichnungen ersichtlich, ist die Welle, auf der die Rollen 12, 13 und 14 mit den prägenden Zeichen fortschaltbar gelagert sind, als Hohlwelle 15 ausgebildet. Der Durchmesser dieser Hohlwelle ist, bezogen auf den Durchmesser der Rollen 12, 13 und 14, groß bemessen. Diese Hohlwelle ist an den Kühlkreislauf 16 angeschlossen und vom Kühlmedium durchströmt. Dank des gewählten Durchmesserverhältnisses sind die die Zeichen tragenden Rollen 12, 13 und 14 ausreichend gekühlt, so daß alle Abschnitte und Teile der formgebenden Flächen eine möglichst gleichmäßige Temperatur und Temperaturverteilung aufweisen. Für die Herstellung qualitativ hochwertiger Hohlkörper ist dies eine wesentliche Voraussetzung. Solche Hohlkörper werden als Emballagen für unter Umständen gefährliche Stoffe verwendet, und aus diesem Grund müssen solche Behälter hohen Sicherheitsanforderungen genügen. Darüberhinaus müssen sie an ihrem Herstellungsort rückverfolg bar sein, falls bei ihrer oder durch ihre Verwendung Schaden entstehen sollte.

Bei einem besonders bevorzugten Ausführungsbeispiel wird zur Kühlung der beiden Formteile 1, 2 anstelle der Kanäle 3 eine sogenannte Schalenkühlung eingesetzt. Dabei sind in den Formteilen hinter den formgebenden Flächen jeweils ein oder mehrere durchgehende Hohlräume vorgesehen, in denen Lamellen zur Führung des Kühlwasserflusses angeordnet sind. Durch diese Lamellen wird das dem jeweiligen Hohlraum zugeführte Kühlwasser zickzack-förmig durch den Hohlraum geführt und kühlt dadurch die formgebende Fläche gleichmäßig. Beispielsweise sind jedem Formteil drei Wasseranschlüsse zugeordnet, durch welche jeweils 100 l/min. strömen. Das einströmende Kühlwasser weist dabei eine Temperatur von 12° Celsius und das ausströmende Kühlwasser eine Temperatur von 13° Celsius auf.

### Legende

### zu den Hinweisziffern:

- 1: Formteil
- 2: Formteil
- 3: Kanal
- 4: Wandung
- 5: Wandung
- 6: Trennfläche
- 7: Fenster
- 8: Öffnung
- 9: Öffnung
- 10: Öffnung
- 11: Rollenzählwerk
- 12: Rolle
- 13: Rolle
- 14: Rolle
- 15: Hohlwelle
- 16: Kühlkreis
- 17: Schaltstift

## Patentansprüche

1. Blasform mit einem Formhohlraum zur Herstellung von aus Kunststoffen gefertigten Hohlkörpern, bestehend aus mindestens zwei Formteilen (1, 2), die bei geschlossenem Zustand mit ihren inneren Wendungen (4, 5) den den zu fertigenden Hohlraum gestaltenden Formhohlraum bilden, dadurch gekennzeichnet, daß an der inneren Wandung (5) des Formhohlraumes mindestens ein Fenster (7) ausgespart ist, in bzw. hinter welchem ein mechanisches Zählwerk mit Umdrehungszählung, insbesondere ein Rollenzählwerk (11), angeordnet ist, wobei die Rollen (8, 9, 10) des Rollenzählwerks (11) auf einer Hohlwelle (15) gelagert sind und diese Hohlwelle (15) an einem Kühlkreis (16) des Formteiles (2) angeschlossen ist.

2. Blasform nach Anspruch 1, dadurch gekennzeichnet, daß das Fenster (7) aus mehreren nebeneinander angeordneten Öffnungen (8, 9, 10) gebildet ist und die Anzahl der Öffnungen (8, 9, 10) des Fensters (7) der Anzahl der Rollen (12, 13, 14) des Rollenzählwerks (11) entspricht.

3. Blasform nach Anspruch 1 oder 2, dadurch gekennzeichnet, daß das Fenster (7) nahe einer Trennfläche (6) eines Formteiles (2) liegt.

4. Blasform nach Anspruch 3, dadurch gekennzeichnet, daß die Rollen (12, 13, 14) des Rollenzählwerks (11) mechanisch fortschaltbar sind und ein die Fortschaltung bewirkender Schaltstift (17) im wesentlichen rechtwinkelig zur Trennfläche (6) des Formteiles (2) angeordnet ist und gegenüber dieser vorsteht.

5. Blasform nach einem der Ansprüche 1 bis 4, dadurch gekennzeichnet, daß die Formteile durch eine Schalenkühlung gekühlt sind, wobei in den Formteilen hinter den formgebenden Flächen jeweils ein oder mehrere Hohlräume vorgesehen sind, in denen Lamellen zur Führung des zugeführten Kühlwassers angeordnet sind.
